# EUROPEAN PATENT APPLICATION

(11) **EP 4 474 674 A1**
(43) Date of publication of application: **11.12.2024**
(21) Application number: 23178036.2
(22) Date of filing: 07.06.2023
(51) Int. Cl.: F16F 13/14

(54) **BUSHING FOR VEHICLE AND VEHICLE COMPRISING AT LEAST ONE BUSHING**

(71) Applicant: Volvo Car Corporation, 405 31 Göteborg (SE)
(72) Inventor: AHO, Christian, 40531 Göteborg (SE); SKAGIUS, Adam, 40531 Göteborg (SE); NORDELL, Magnus, 40531 Göteborg (SE)
(74) Representative: Maiwald GmbH

(57) **Abstract**

The disclosure relates to a bushing (100) for a vehicle, comprising: an inner sleeve (102) being couplable to a first part of the vehicle, an outer sleeve (104) being couplable to a second part of the vehicle, and a damping assembly (106) being configured to damp a relative movement between the inner sleeve (102) and the outer sleeve (104), the outer sleeve (104) being arranged around the inner sleeve (102) such that a radial gap (108) is provided between the inner sleeve (102) and the outer sleeve (104), the damping assembly (106) being disposed in the radial gap (108) between the outer sleeve (104) and the inner sleeve (102), and comprising a rubber body (110), at least one channel body (112), and a fluid (114), the rubber body (110) being attached to the inner sleeve (102), the channel body (112) being arranged around at least a part of an outer surface (116) of the rubber body (110) and configured to provide a fluid circuit for the fluid (114), and wherein an inner surface (120) of the channel body (112) facing towards the rubber body (110) has an uneven structure (128) configured to limit a flow of at least part of the fluid (114). Further, the disclosure relates to a vehicle comprising at least a bushing (100) connecting a first part of the vehicle with a second part of the vehicle, wherein the first part of the vehicle is coupled with the inner sleeve (102) and the second part of the vehicle is coupled with the outer sleeve (104).

## Description

### TECHNICAL FIELD

The present disclosure relates to a bushing for a vehicle and a vehicle comprising at least a bushing.

### BACKGROUND ART

In vehicles, it is commonly known to use bushings for isolating the vehicle from road and/or engine vibrations, e.g., due to suspension traveling on uneven road surfaces. There are different types of bushings, such as bushings designed for one specific vibration frequency, e.g., rubber bushings or urethane bushings, and bushings designed for different vibration frequencies, e.g., hydro bushings. Hydro-bushings are filled with a fluid, e.g., glycol.

### SUMMARY

There may be a need to provide an improved bushing for a vehicle, which, in particular, allows reducing wear of the bushing thereby increasing lifetime of the bushing.

The object of the present disclosure is at least partially solved or alleviated by the subject-matter of the appended independent claims, wherein further examples are incorporated in the dependent claims.

According to a first aspect, there is provided a bushing for a vehicle. The bushing comprises an inner sleeve, an outer sleeve and a damping assembly. The inner sleeve is couplable to a first part of the vehicle. The outer sleeve is couplable to a second part of the vehicle and arranged around the inner sleeve such that a radial gap is provided between the inner sleeve and the outer sleeve. The damping assembly is configured to damp a relative movement between the inner sleeve and the outer sleeve, and is disposed in the radial gap between the outer sleeve and the inner sleeve. The damping assembly comprises a substantially cylindrical rubber body, at least one channel body and a fluid, particularly a damping fluid. The rubber body is attached to the inner sleeve, particularly to an outer surface of the inner sleeve. The channel body is arranged around at least a part of an outer surface of the rubber body and configured to provide a fluid circuit for the fluid. An inner surface of the channel body that faces towards the rubber body has an at least partially uneven structure, which is configured to limit a flow of at least part of the fluid.

The rubber body may comprise hollow sections and/or grooves, which are configured to accommodate and/or guide the fluid within the damping assembly. In an unload condition of the bushing, there is a radial clearance between the outer surface of the rubber body and the inner surface of the channel body, the radial clearance being configured to be at least partly filled with the fluid. The uneven structure is at least present in an area, in which the rubber body comes into contact with the channel body, when the bushing is in a load condition. In a load condition of the bushing, the rubber body is elastically deformed to dampen and/or to compensate the applied load, particularly vibrations, thereby reducing and/or preventing transmission of the applied load between the inner sleeve and the outer sleeve. Due to such elastic deformation, the rubber body may come into contact with the at least one channel body, thereby displacing at least part of the fluid.

The uneven structure limits the flow of at least part of the fluid thereby allowing at least part of the fluid to stay on the channel body in the load condition of the bushing. In other words, the uneven structure allows keeping at least part of the liquid between the inner surface of the body channel and the outer surface of the rubber body, at least in a contact area, i.e., an area, in which the elastically deformed rubber body is in contact with the channel body. Particularly, the fluid between the rubber body and the channel body, when being in contact with each other, reduces and/or prevents wear of the damping assembly, particularly of the rubber body, thereby increasing the lifetime of the bushing. In other words, the fluid between the channel body and the rubber body being in contact with each other may form a lubrication film on the inner surface of the channel body, reducing a friction between the rubber body and the channel body, which results in reducing and/or preventing wear of the rubber body and by that increases the lifetime of the bushing.

By reducing and/or preventing wear of the rubber body, the clearance between the channel body and the rubber body in the unloaded condition of the bushing may maintain substantially constant, resulting in a substantially constant travel distance and/or travel time, the travel distance being the distance, the rubber body is displaced by being elastically deformed to come into contact with the channel body and the travel time being a time period the rubber body needs to come into contact with the channel body. By reducing and/or preventing the clearance from increasing, thus by reducing or preventing wear of the rubber body, leakage failure on the bushing may be prevented. Furthermore, blocking the channels on the channel body due to rubber wear, thereby blocking a fluid flow in the bushing, which may also cause leakage failure of the bushing, is reduced and/or prevented.

In other words, one can say that the bushing according to the first aspect allows lubricating the inner surface of the channel body against the contact with the rubber body thereby extending lifetime of the rubber body and consequently extending lifetime of the bushing. Furthermore, the bushing allows longer linear travel of the rubber body inside the bushing, thereby improving a noise-vibration-harshness (NVH) and/or increasing the comfort of a ride in the vehicle.

The rubber body may be also referred to as snubber, rubber snubber etc. The bushing may be also referred to as hydro bushing, rubber bushing etc.

According to an example, the structure may be integrally formed with the inner surface of the channel body. This way, detachment of the structure from the channel body may be prevented. Furthermore, a high dimensional stability and/or a high positional accuracy may be achieved. Additionally, manufacturing steps for manufacturing the at least one channel body may be reduced. For example, the channel body including the structure may be molded.

According to an example, the structure may be formed as a separate, particularly textured, member being attached to the inner surface of the channel body. This may allow using different materials for the channel body and the structure, which allows choosing the materials according to the function. For example, the structure may be glued, overmolded etc. to the inner surface of the channel body.

According to an example, the structure may be formed on the entire inner surface of the channel body. This may allow ensuring lubricating the contact between the channel body and the rubber body regardless of a position and/or size of the contacting area.

According to an example, the structure may have a groove pattern forming a recess geometry for receiving at least part of the fluid. The groove pattern may be a simple pattern being easy to manufacture. Furthermore, it may allow a smooth fluid flow within the clearance between the channel body and the rubber body, when there is no contact between the channel body and the rubber body.

According to an example, the structure may have a rhombic pattern or a dimple pattern forming a recess geometry for receiving at least part of the fluid. The rhombic or the dimple pattern may allow reducing the amount of fluid between the channel body and the rubber body being displaced due to the contact between the channel body and the rubber body. In other words, the rhombic pattern or the dimple pattern may allow improving lubrication of the contact area between the channel body and the rubber body.

According to an example, the channel body may be formed from a plastic material. Plastic materials may have good sliding characteristics (low friction) and/or may be cost-efficient with regard to purchase and/or manufacturing.

According to an example, the channel body may be formed of two separate curved particularly plate-like, elements. Two separated elements forming the channel body may allow simplifying an assembly of the bushing. Furthermore, curved, particularly plate-like, elements may be easier and/or cheaper to produce than one substantially cylindrical element.

According to an example, the channel body may be manufactured by injection-molding. Injection molding may allow also more complex geometries to be cost-efficiently mass-produced.

According to an example, the channel body may further comprise at least two passage openings configured to fluidly connect an area at the inner surface of the channel body with an area at an outer surface of the channel body. Thus, the fluid circuit provided by the channel body may allow the fluid in the clearance between the rubber body and the channel body flowing to the area at the outer surface of the channel body, and vice versa. In other words, the at least two passage openings may fluidly connect the clearance formed between the outer surface of the rubber body and the inner surface of the channel body with the area at the outer surface of the channel body. Thus, the at least two passage openings may allow the fluid being displaced due to the elastic deformation of the rubber body, flowing to the area at the outer surface of the channel body, thereby preventing an increase of pressure inside the bushing resulting from lack of space for the fluid to be displaced due to the rubber body contacting the channel body.

According to an example, the channel body may further comprise a channel connecting the at least two passage openings and configured to guide a flow of the fluid at the outer surface of the channel body. The channel may allow providing a predefined guidance of the fluid at the area at the outer surface of the channel body thereby reducing or preventing loss of fluid in the area at the outer surface of the channel body. In other words, the passage may allow ensuring that the amount of fluid exiting the clearance between the outer surface of the rubber body and the inner surface of the channel body to the area at the outer surface of the channel body through one passage opening substantially corresponds to an amount of fluid flowing from the area at the outer surface of the channel body into the clearance through another one of the at least two passage openings.

According to an example, the fluid may be a lubricant. Lubricants may provide specific characteristics for reducing or minimizing friction. In other words, lubricants may be fluids being designed to have good or even excellent sliding or lubricating characteristics.

According to an example, the fluid may be a damping fluid. A damping fluid may be a fluid being designed to have good or even excellent damping characteristics. In particular, viscous fluids may be used as damping fluids.

According to an example, an outer surface of the rubber body facing towards the channel body may have an at least partially uneven structure configured to limit the flow of at least part of the fluid.

The uneven structure limits the flow of at least part of the fluid thereby allowing at least part of the fluid to stay on the rubber body in the load condition of the bushing. In other words, the uneven structure being additionally provided at the rubber body allows increasing an amount of fluid being kept between the inner surface of the body channel and the outer surface of the rubber body, at least in a contact area, i.e., an area, in which the elastically deformed rubber body is in contact with the channel body. This way, the increased amount of fluid being present between the rubber body and the channel body, when being in contact with each other, further reduces and/or prevents wear of the damping assembly, particularly of the rubber body, thereby increasing the lifetime of the bushing. As an alternative, it may be also possible to provide the at least partially uneven structure at the rubber body only.

According to a second aspect, there is provided a vehicle. The vehicle comprises at least a bushing according to the first aspect, which connects a first part of the vehicle with a second part of the vehicle, wherein the first part of the vehicle is coupled with the inner sleeve and the second part of the vehicle is coupled with the outer sleeve. This allows improving the comfort of a ride in such vehicle. Furthermore, it allows reducing maintenance cycles of the vehicle, since the bushings need to be replaced less often or even not at all. Consequently, there is a reduced need for providing spare parts for the at least one bushing.

It should be noted that the above examples may be combined with each other irrespective of the aspect involved.

These and other aspects of the present disclosure will become apparent from and elucidated with reference to the embodiments described hereinafter.

### BRIEF DESCRIPTION OF DRAWINGS

Exemplary examples of the disclosure will be described in the following with reference to the following drawings.
- Fig. 1: shows schematically and exemplarily a bushing according to the present disclosure in an exploded view.
- Fig. 2: shows schematically and exemplarily a cross-sectional view of a bushing according to the present disclosure.
- Fig. 3: shows schematically and exemplarily a channel plate of a bushing according to the present disclosure in a first perspective view (Fig. 3(a)) and a second perspective view (Fig. 3(b)).
- Fig. 4: shows schematically and exemplarily a cross-sectional view of a channel plate of the bushing according to the present disclosure.
- Fig. 5: shows schematically and exemplarily an illustration of a rubber body and a channel plate of a bushing according to the present disclosure before (Fig. 5(a)) and after (Fig. 5(b)) contacting each other.
- Fig. 6: shows schematically and exemplarily an illustration of a rubber body and a channel plate of a bushing according to the state of the art before (Fig. 6(a)) and after (Fig. 6(b)) contacting each other.

The figures are merely schematic representations and serve only to illustrate examples of the disclosure. Identical or equivalent elements are in principle provided with the same reference signs.

### DESCRIPTION OF EMBODIMENTS

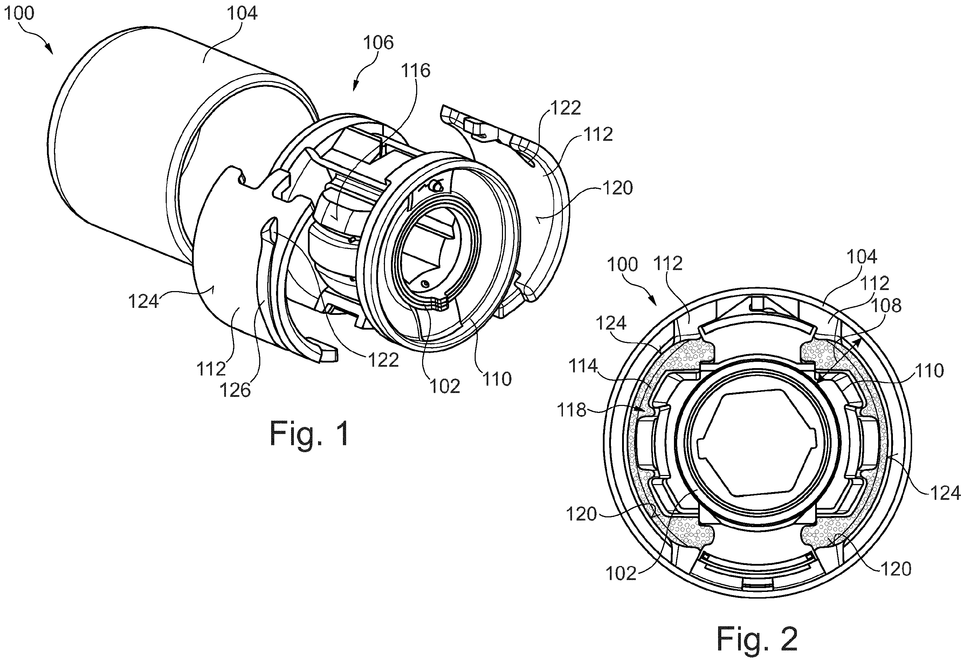

Figures 1 and 2 show schematically and exemplarily a bushing 100 for a vehicle.

The bushing 100 comprises an inner sleeve 102, an outer sleeve 104 and a damping assembly 106. The inner sleeve 102 is couplable to a first part of the vehicle, and the outer sleeve 104 is couplable to a second part of the vehicle, wherein the outer sleeve 104 is arranged around the inner sleeve such that a radial gap 108 (see Figure 2) is provided between the inner sleeve 102 and the outer sleeve 104.

The damping assembly 106 is disposed in the radial gap 108 and comprises a rubber body 110, two channel bodies 112 and a fluid 114, e.g., a lubricant and/or a damping fluid. Here, the rubber body 110 is formed substantially cylindrical, and the rubber body 110 is attached to the inner sleeve 102. As it can be seen in Figure 1, the inner sleeve 102 may be fully surrounded by the rubber body. The channel bodies 112 are formed as curved, plate-like elements and are arranged at an outer surface 116 of the rubber body 110, such that the two channel bodies 112 together substantially surround the outer surface 116 of the rubber body 110. In an unload condition of the bushing 100, this means, in a state in which substantially no loads are applied and/or transmitted to the inner sleeve 102 and/or the outer sleeve 104, there is a clearance 118 between an inner surface 120 of the channel bodies 112 and the outer surface 116 or the rubber body 110, in which the fluid 114 is present. The inner surface 120 of each of the channel bodies 112 is a surface facing towards the rubber body 110.

Further, each of the channel bodies 112 comprises a passage opening 122 fluidly connecting an area at the inner surface 120 of the channel body 112 with an area at an outer surface 124 of the channel body 120; and a channel 126 being formed on the outer surface 124 of the channel body 112 and configured to guide a flow of the fluid 114 at the outer surface 124 of the channel body 112. Thus, the channel bodies 120 are configured to provide a fluid circuit for the fluid 114.

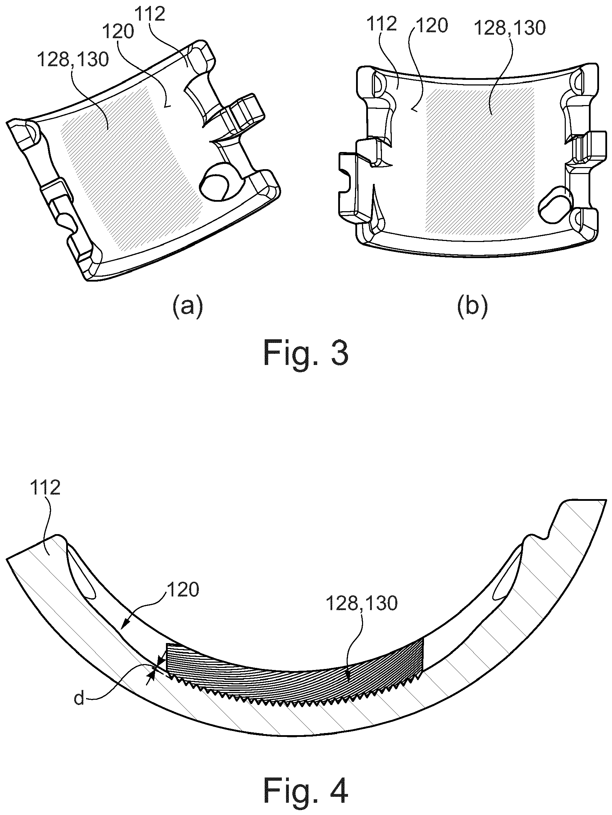

Additionally, as shown in Figures 3 and 4, the inner surface 120 of each of the channel bodies 112 comprises an at least partially uneven structure 128, which is configured to limit a flow of at least part of the fluid 114 being present in the clearance 118 between the rubber body 110 and the channel body 112 in the unload condition of the bushing 100. The uneven structure 128 as exemplarily shown in Figures 3 and 4 is integrally formed with the inner surface 120 of the channel body 112. The uneven structure 128 as exemplarily shown in Figures 3 and 4 has a groove-like pattern, which forms a recess geometry 130 for receiving at least part of the fluid 114, the recess geometry 130 being formed of several grooves being arranged parallel to one another.

However, the uneven structure 128 may have any recess geometry 130 other than the groove-like pattern, e.g., a rhombic pattern, a dimple pattern etc. The recess geometry 130 corresponds to a geometry and/or a pattern forming several, particularly evenly arranged, recess geometries, like grooves, dimples, ditches, notches etc., which form depressions d when seen from the inner surface 120 of the channel body 112 (see also Figure 4). In other words, one can say that the uneven structure 128 forms or provides a textured area on the inner surface 120 of the channel body 112. In particular, the uneven structure 128 is integrally formed with the inner surface 120 of the channel body 112. Alternatively, the uneven structure 128 may be formed separately from the inner surface 120 of the channel body 112, which is then attached, e.g., by gluing, overmolding etc., to the inner surface 120 of the channel body 112.

The uneven structure 128 allows at least part of the fluid 114 being present in the clearance 118 between the outer surface 116 of the rubber body 110 and the inner surface 120 of the channel body 112 to remain in place, even when the clearance 118 at least sectionally not present due the rubber body 110 contacting the channel body 112, which will be described in more detail with regard to Figured 5 and 6.

The rubber body 110 is made from a deformable material, particularly an elastically deformable material and is configured to at least partly compensate loads acting on the inner sleeve 102 and/or the outer sleeve 104 to reduce or even prevent transmitting such loads from the inner sleeve 102 to the outer sleeve 104 or vice versa. This means that the rubber body 110 is configured to compensate such loads by being elastically deformed.

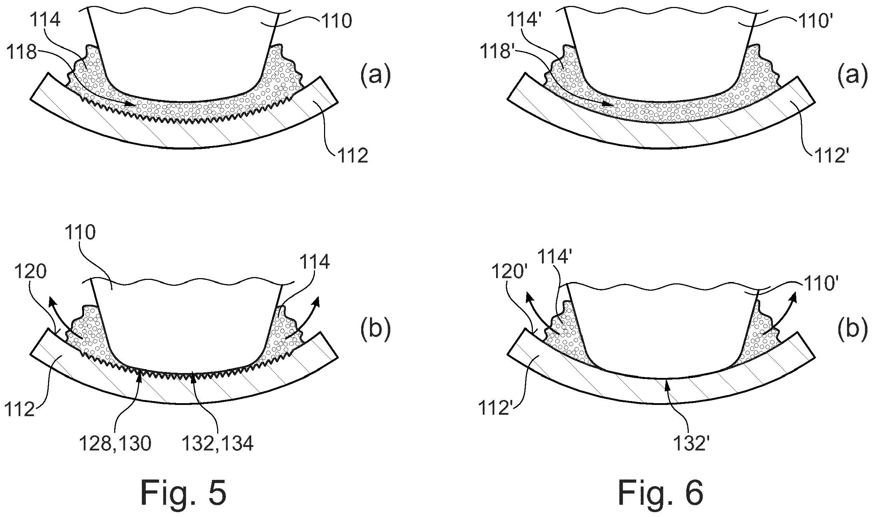

Hence, in an unload condition of the bushing, this means, in a state, in which no load is acting on the inner sleeve 102 and/or the outer sleeve 104, there is no contact between the outer surface 116 of the rubber body 110 and the inner surface 120 of the channel bodies 112, and the clearance 118 is present and filled with the fluid 114 (see Figure 5(a)). When a load is acting on one of the inner sleeve 102 and the outer sleeve 104, which corresponds to a load condition of the bushing 100, the rubber body 110 is elastically deformed causing at least part of the outer surface 116 of the rubber body 110 to come into contact with at least part of the inner surface 120 of the channel body, thus forming a contact area 132. The elastic deformation of the rubber body 110 displaces the fluid 114 being present between the rubber body 110 and the channel body 112 as indicated by arrows P1 in Figure 5(b)). By having the uneven structure 128 being arranged at least in the contact area 132 of the elastically deformed rubber body 110 and the channel plate 112, at least part of the fluid 114 remains in the recess geometry 130 formed by the uneven structure, thereby forming a fluid film 134 between the rubber body 110 and the channel body 112 in the contact area 132. The fluid film 134 reduces friction between the outer surface 116 of the rubber body 110 and the inner surface 120 of the channel body 112, thereby reducing wear of the rubber body 110.

Figure 6 schematically shows a rubber body 110' and a channel body 112' in an unload condition (Figure 6(a)) forming a clearance 118' filled with a fluid 114', and in a load condition (Figure 6(b)) of a bushing known in the art. As can be seen in Figure 6, an inner surface 120' of the channel body 112' as known in the art does not have an uneven structure. Thus, in the load condition of the bushing (Figure 6(b)), the fluid 114' in the contact area 132' is almost completely displaced by the deformation of the rubber body 110'. Consequently, there is no fluid film present in the contact area 132' between the rubber body 110' and the channel body 112'. Thus, compared to the bushing 100 according to the present disclosure, and exemplarily shown in the Figures 1 to 5, the friction between the rubber body 110' and the channel body 112' contacting each other is increased, which leads to an increased wear of the rubber body 110'.

A vehicle (not shown) according to the present disclosure comprises at least one bushing 100 connecting the first part of the vehicle with the second part of the vehicle. For example, combinations of the first part and the second part (listed as "first part"-"second part" in the following) may comprise: subframe-link arm, link arm-body, engine-subframe, motor-subframe, engine-body, motor-body, water pump-body, radiator-subframe, steering gear-subframe, subframe-body, etc.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 100: bushing
- 102: inner sleeve
- 104: outer sleeve
- 106: damping assembly
- 108: radial gap
- 110, 110': rubber body
- 112, 112': channel body
- 114, 114': fluid
- 116: outer surface (rubber body)
- 118, 118': clearance
- 120, 120': inner surface (channel body)
- 122: passage opening
- 124: outer surface (channel body)
- 126: channel
- 128: uneven structure
- 130: recess geometry
- 132, 132': contact area
- 134: fluid film

- d: depression

## Claims

1. A bushing (100) for a vehicle, comprising:
an inner sleeve (102) being couplable to a first part of the vehicle,
an outer sleeve (104) being couplable to a second part of the vehicle, and
a damping assembly (106) being configured to damp a relative movement between the inner sleeve (102) and the outer sleeve (104),
the outer sleeve (104) being arranged around the inner sleeve (102) such that a radial gap (108) is provided between the inner sleeve (102) and the outer sleeve (104),
the damping assembly (106) being disposed in the radial gap (108) between the outer sleeve (104) and the inner sleeve (102), and comprising a rubber body (110), at least one channel body (112), and a fluid (114),
the rubber body (110) being attached to the inner sleeve (102),
the channel body (112) being arranged around at least a part of an outer surface (116) of the rubber body (110) and configured to provide a fluid circuit for the fluid (114), and
wherein an inner surface (120) of the channel body (112) facing towards the rubber body (110) has an uneven structure (128) configured to limit a flow of at least part of the fluid (114).

2. The bushing (100) according to claim 1, the uneven structure (128) being integrally formed with the inner surface (120) of the channel body (112).

3. The bushing (100) according to claim 1, the uneven structure (128) being formed as a separate member being attached to the inner surface (120) of the channel body (112).

4. The bushing (100) according to any of claims 1 to 3, the uneven structure (128) being formed on the entire inner surface (120) of the channel body (112).

5. The bushing (100) according to any of claims 1 to 4, the uneven structure (128) having a groove pattern forming a recess geometry (130) for receiving at least part of the fluid (114).

6. The bushing (100) according to any of claims 1 to 4, the uneven structure (128) having a rhombic pattern forming a recess geometry (130) for receiving at least part of the fluid (114).

7. The bushing (100) according to any of claims 1 to 6, the channel body (112) being formed from a plastic material.

8. The bushing (100) according to any of claims 1 to 7, the channel body (112) being formed of two separate curved elements.

9. The bushing (100) according to any of claims 1 to 8, the channel body (112) being manufactured by injection-molding.

10. The bushing (100) according to any of claims 1 to 9, the channel body (112) further comprising at least two passage openings (122) configured to fluidly connect an area at the inner surface (120) of the channel body (112) with an area at an outer surface (124) of the channel body (112).

11. The bushing (100) according to claim 10, the channel body (112) further comprising a channel (126) connecting the at least two passage openings (122) and configured to guide a flow of the fluid (114) at the outer surface (124) of the channel body (112).

12. The bushing (100) according to any of claims 1 to 11, the fluid (114) being a lubricant.

13. The bushing (100) according to any of claims 1 to 12, the fluid (114) being a damping fluid.

14. The bushing (100) according to any of claims 1 to 13, an outer surface (116) of the rubber body (110) facing towards the channel body (112) having an uneven structure configured to limit the flow of at least part of the fluid (114).

15. A vehicle comprising at least a bushing (100) according to any of claims 1 to 14 connecting a first part of the vehicle with a second part of the vehicle, wherein the first part of the vehicle is coupled with the inner sleeve (102) and the second part of the vehicle is coupled with the outer sleeve (104).

## Amended claims

### Amended claims in accordance with Rule 137(2) EPC.

1. A bushing (100) for a vehicle, comprising:
an inner sleeve (102) being couplable to a first part of the vehicle,
an outer sleeve (104) being couplable to a second part of the vehicle, and
a damping assembly (106) being configured to damp a relative movement between the inner sleeve (102) and the outer sleeve (104),
the outer sleeve (104) being arranged around the inner sleeve (102) such that a radial gap (108) is provided between the inner sleeve (102) and the outer sleeve (104),
the damping assembly (106) being disposed in the radial gap (108) between the outer sleeve (104) and the inner sleeve (102), and comprising a rubber body (110), at least one channel body (112), and a fluid (114),
the rubber body (110) being attached to the inner sleeve (102),
the channel body (112) being arranged around at least a part of an outer surface (116) of the rubber body (110) and configured to provide a fluid circuit for the fluid (114), and
wherein an inner surface (120) of the channel body (112) facing towards the rubber body (110) has an uneven structure (128) configured to limit a flow of at least part of the fluid (114),
**characterized in that** the uneven structure (128) has a rhombic pattern or a dimple pattern forming a recess geometry (130) for receiving at least part of the fluid (114).

2. The bushing (100) according to claim 1, the uneven structure (128) being integrally formed with the inner surface (120) of the channel body (112).

3. The bushing (100) according to claim 1, the uneven structure (128) being formed as a separate member being attached to the inner surface (120) of the channel body (112).

4. The bushing (100) according to any of claims 1 to 3, the uneven structure (128) being formed on the entire inner surface (120) of the channel body (112).

5. The bushing (100) according to any of claims 1 to 4, the channel body (112) being formed from a plastic material.

6. The bushing (100) according to any of claims 1 to 5, the channel body (112) being formed of two separate curved elements.

7. The bushing (100) according to any of claims 1 to 6, the channel body (112) being manufactured by injection-molding.

8. The bushing (100) according to any of claims 1 to 7, the channel body (112) further comprising at least two passage openings (122) configured to fluidly connect an area at the inner surface (120) of the channel body (112) with an area at an outer surface (124) of the channel body (112).

9. The bushing (100) according to claim 8, the channel body (112) further comprising a channel (126) connecting the at least two passage openings (122) and configured to guide a flow of the fluid (114) at the outer surface (124) of the channel body (112).

10. The bushing (100) according to any of claims 1 to 9, the fluid (114) being a lubricant.

11. The bushing (100) according to any of claims 1 to 10, the fluid (114) being a damping fluid.

12. The bushing (100) according to any of claims 1 to 11, an outer surface (116) of the rubber body (110) facing towards the channel body (112) having an uneven structure configured to limit the flow of at least part of the fluid (114).

13. A vehicle comprising at least a bushing (100) according to any of claims 1 to 12 connecting a first part of the vehicle with a second part of the vehicle, wherein the first part of the vehicle is coupled with the inner sleeve (102) and the second part of the vehicle is coupled with the outer sleeve (104).
